# EUROPÄISCHE PATENTSCHRIFT

(11) **EP 0 815 978 B1**
(45) Veröffentlichungstag und Bekanntmachung des Hinweises auf die Patenterteilung: **10.11.1999**
(21) Anmeldenummer: 97108907.3
(22) Anmeldetag: 03.06.1997
(51) Int. Cl.: B21D 19/00, B21D 28/00, B60R 22/00

(54) **Verfahren zum Herstellen von Blechteilen für Fahrzeuginsassen-Rückhaltesysteme**
Method of producing sheet metal parts for vehicle safety belt systems
Méthode de production des pièces en tôle pour des systèmes de ceinture de sécurité d'un véhicule

(30) Priorität: 24.06.1996 DE 19625233
(43) Veröffentlichungstag der Anmeldung: 07.01.1998
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Degwert, Hartmut, Dipl.-Phys.

(56) Entgegenhaltungen:
- PATENT ABSTRACTS OF JAPAN vol. 015, no. 485 (M-1188), 9.Dezember 1991 & JP 03 208514 A (NIPPON STEEL CORP), 11.September 1991,
- PATENT ABSTRACTS OF JAPAN vol. 015, no. 123 (C-0816), 26.März 1991 & JP 03 006387 A (MITSUBISHI ELECTRIC CORP), 11.Januar 1991,
- PATENT ABSTRACTS OF JAPAN vol. 017, no. 222 (M-1404), 7.Mai 1993 -& JP 04 356251 A (TOKAI RIKA CO LTD), 9.Dezember 1992,

## Beschreibung

Die Erfindung betrifft ein Verfahren zum Herstellen von Blechteilen für Fahrzeuginsassen-Rückhaltesysteme, beispielsweise lasttragenden Gehäuse-, Rahmen- und Beschlagteilen aus Blech für Sicherheitsgurtsysteme. Diese Blechteile sind insbesondere Rahmen für Sicherheitsgurtaufroller, Beschlagteile zur Verankerung von Gurtschlössern und Schienen für höhenverstellbare Sicherheitsgurt-Umlenkbeschläge.

Bisher werden solche Blechteile in mehreren Trennschritten, vorzugsweise mittels Stanzen, aus Blech hergestellt, das in Bandform angeliefert und der Stanzmaschine zugeführt wird. Nachdem das Blechteil fertig gestanzt ist, wird eine Korrosionsschutzbehandlung durchgeführt, da solche Blechteile als sicherheitsrelevanter Bestandteil des Fahrzeuginsassen-Rückhaltesystems keinesfalls korrodieren dürfen. Dies gilt in besonderem Maße für lasttragende Blechteile, die im Hinblick auf eine bestimmte Bruchlast dimensioniert sind, welche im korrodierten Zustand möglicherweise nicht erreicht wird. Die Korrosionsschutzbehandlung besteht üblicherweise im galvanischen Aufbringen einer Beschichtung.

Aus der JP 03006387 ist bekannt, verzinktes Blech zu stanzen. Dabei wird ein Teil des auf der Oberfläche des Blechs vorhandenen Zinks durch den Stanzvorgang auf die Stanzkante gebracht. Um trotz des großen Teils der sich ergebenden Stanzkante, der nicht mit dem Zink bedeckt ist, einen vollständigen Korrosionsschutz zu erhalten, wird eine Schutzschicht aus z.B. Zinkphosphat aufgebracht.

Die Aufgabe der Erfindung besteht darin, ein Verfahren zu schaffen, bei dem eine zusätzliche Beschichtung mit einem anderen Material nicht erforderlich ist.

Zu diesem Zweck ist gemäß einer ersten Variante der Erfindung ein Verfahren zum Herstellen von Blechteilen für Fahrzeuginsassen-Rückhaltesysteme ausgehend von verzinktem Blech in Bandform vorgesehen, bei dem mindestens ein Trennschritt durchgeführt wird, durch den das Blechteil von dem in Bandform zugeführten Blech getrennt wird, sowie ein Nachbearbeitungsschritt, bei dem Zink, das bei dem Trennschritt von der Oberfläche des Blechs auf einen Teil der bei dem Trennschritt entstehenden Materialkante gebracht wird, über einen größeren Flächenbereich der Materialkante verteilt wird. Gemäß einer zweiten Variante ist ein Verfahren zum Herstellen von Blechteilen für Fahrzeuginsassen-Rückhaltesysteme ausgehend von verzinktem Blech in Bandform vorgesehen, bei dem mindestens ein Trennschritt durchgeführt wird, durch den das Blechteil von dem in Bandform zugeführten Blech getrennt wird, sowie ein Nachbearbeitungsschritt, bei dem Zink von der Oberfläche des Blechteils auf den von Zink unbedeckten Teil der bei dem Trennschritt entstehende Materialkante gebracht wird.

Bisher wurde davon ausgegangen, daß die Verwendung von verzinktem Blech zu keinen Vorteilen bei der Herstellung von Blechteilen für Fahrzeuginsassen-Rückhaltesysteme führt, da ungeachtet des gegebenen Korrosionsschutzes für die Oberfläche des Blechteils eine Korrosionsschutzbehandlung für die bei der Bearbeitung entstehenden Materialkanten notwendig sei. Die Erfindung beruht auf der Erkenntnis, daß allein mit dem auf dem Blech vorhandenen Zink die bei dem Trennschritt entstehenden Materialkanten vollständig vor Korrosion geschützt werden können.

Die bei einer Trennbearbeitung entstehende Materialkante setzt sich üblicherweise aus einem Anschnittbereich und einem Ausbruchbereich zusammen. Das für die Trennbearbeitung verwendete Werkzeug bringt einen Teil des sich auf der Oberfläche des Blechs befindenden Zinks auf den Anschnittbereich. Dieser ist somit vor Korrosion geschützt. Überraschenderweise sind aber nicht nur die mit Zink beschichteten Bereiche des Blechteils vor Korrosion geschützt; aufgrund einer Fernwirkung des Zinks sind auch die nicht mit Zink bedeckten Bereiche der Materialkante vor Korrosion geschützt. Die Fernwirkung reicht aus, um einen zinkfreien Bereich von etwa einem Millimeter Breite vor Korrosion zu schützen. Je nach der Güte der Trennbearbeitung ergibt sich ein mehr oder weniger großer Ausbruchbereich. Üblich ist ein Verhältnis zwischen der Höhe des Anschnittbereichs und der Höhe des Ausbruchbereichs von etwa 1:2 bis etwa 1:4. Daraus ergibt sich, daß die Materialkante von Blechteilen mit einer Dicke zwischen etwa 1,25 mm und etwa 1,5 mm vollständig vor Korrosion allein durch das Zink geschützt ist, das bei einer üblichen Trennbearbeitung wie Stanzen auf den Anschnittbereich gebracht wird. Wird die Trennbearbeitung mit einer höheren Güte ausgeführt, so daß ein Ausbruchbereich mit im Verhältnis zum Anschnittbereich geringerer Höhe entsteht, sind auch bei dickeren Blechen die bei der Trennbearbeitung entstehenden Materialkanten ausreichend vor Korrosion geschützt. Um aber auch dickere Bleche zuverlässig vor Korrosion im Bereich der Stanzkanten zu schützen, wird erfindungsgemäß durch den Nachbearbeitungsschritt das Zink, das entweder auf der Oberseite des Bleches oder sogar schon im Anschnittbereich der Stanzkante vorhanden ist, so weit über den Ausbruchbereich verteilt, daß die Fernwirkung des Zinks die gesamten zinkfreien Bereiche der Materialkante erfaßt.

Vorteilhafte Ausgestaltungen der Erfindung ergeben sich aus den Unteransprüchen.

Die Erfindung wird nachfolgend unter Bezugnahme auf die beigefügte Zeichnung erläutert. In dieser zeigen:
- Figur 1 eine abgebrochene Schnittansicht eines Blechteils, das mit einem Verfahren gemäß dem Stand der Technik hergestellt wurde;
- Figur 2 eine abgebrochene Schnittansicht eines Blechteils, das mit einer Variante eines erfindungsgemäßen Verfahrens hergestellt wurde;
- Figur 3 eine abgebrochene Schnittansicht eines Blechteils, das mit einer weiteren Variante eines erfindungsgemäßen Verfahrens hergestellt wurde; und
- Figur 4 eine abgebrochene Schnittansicht eines Blechteils, das mit einer weiteren Variante eines erfindungsgemäßen Verfahrens hergestellt wurde.

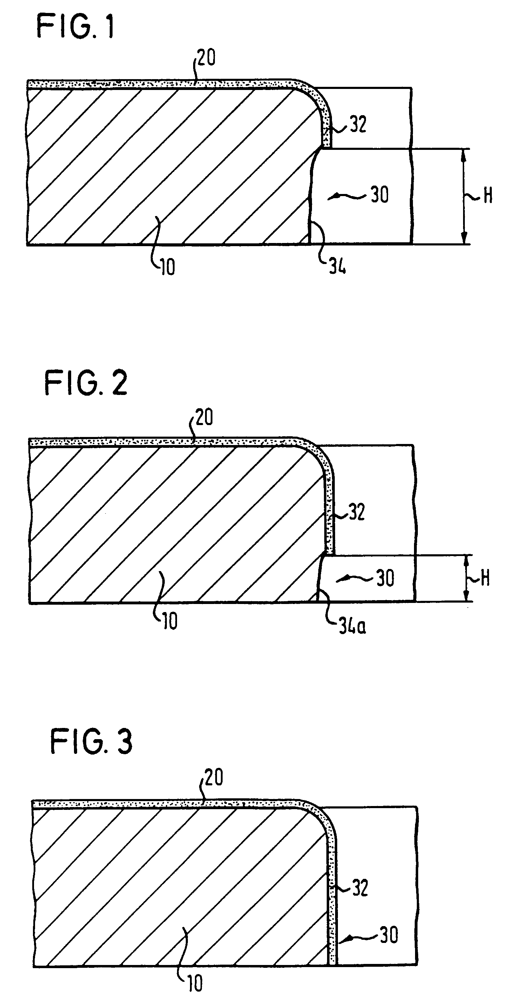

In Figur 1 ist in einer abgebrochenen Schnittansicht ein Abschnitt eines Blechteils 10 dargestellt, das ausgehend von verzinktem Blech hergestellt wurde. Das dargestellte Blechteil ist auf beiden Seiten mit einem Zinküberzug 20 versehen, der in den Figuren 1 bis 3 nur auf einer Seite dargestellt ist. Das Blechteil 10 wird ausgehend von dem verzinkten Blech durch mindestens einen Trennschritt erhalten, vorzugsweise durch Stanzen. Bei diesem Trennschritt entsteht eine Materialkante 30, die einen Anschnittbereich 32 und einen Ausbruchbereich 34 aufweist. Mit dem Trennschritt wird ein Teil des sich in der Nähe der Materialkante 30 auf der Oberfläche des Blechs befindenden Zinks des Zinküberzugs 20 auf den Anschnittbereich 32 gebracht. Der Ausbruchbereich 34 ist frei von Zink. Durch die Fernwirkung des Zinks ist aber nicht nur der Anschnittbereich 32, sondern auch der Ausbruchbereich 34 vor Korrosion geschützt. Es ist festgestellt worden, daß die Fernwirkung des Zinks auf dem Anschnittbereich 32 ausreicht, einen Ausbruchbereich 34 mit einer in der Richtung der Dicke des Blechs gemessenen Höhe H von einem Millimeter vollständig vor Korrosion zu schützen. Bei üblichen Stanzverfahren bedeutet dies, daß die Materialkante von Blechteilen mit einer Dicke zwischen etwa 1,25 mm und etwa 1,5 mm vollständig vor Korrosion geschützt ist.

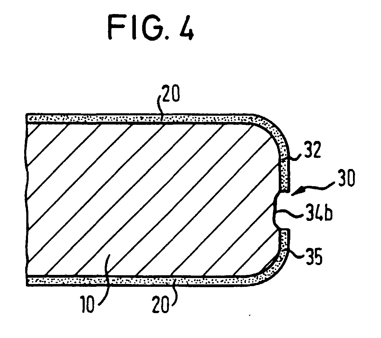

In Figur 2 ist in einer abgebrochenen Schnittansicht ein Abschnitt eines Blechteils 10 dargestellt, das mit einer Variante eines erfindungsgemäßen Verfahrens ausgehend von verzinktem Blech hergestellt wurde. Der Unterschied zu dem Verfahren, das für die Herstellung des in Figur 1 dargestellten Blechteils verwendet wurde, besteht im wesentlichen darin, daß nach dem Trennschritt ein Nachbearbeitungsschritt ausgeführt wurde. Dies ist insbesondere bei dickeren Blechen vorteilhaft, bei denen die Fernwirkung des Zinks auf dem Anschnittbereich 32 nicht ausreicht, den gesamten Ausbruchbereich vor Korrosion zu schützen. Mit dem Nachbearbeitungsschritt wird das Zink, das bei dem Trennschritt auf den Anschnittbereich 32 der Materialkante 30 gebracht wird, über einen größeren Flächenbereich der Materialkante verteilt. Dies kann insbesondere dadurch geschehen, daß das Material des über den Ausbruchbereich 34 hervorstehenden Anschnittbereichs 32 mit dem sich darauf befindenden Zink bezüglich der Figuren nach unten gedrückt wird. Die Höhe H des verbliebenen Teils 34a des ursprünglichen Ausbruchbereichs 34 beträgt weniger als einen Millimeter.

Auf den Nachbearbeitungsschritt kann bei Blechen, die dicker als 1,5 mm sind und bei denen die Fernwirkung des Zinks auf dem Anschnittbereich nicht ausreicht, den gesamten Ausbruchbereich vor Korrosion zu schützen, verzichtet werden, wenn der Trennschritt mit einer besonders hohen Güte ausgeführt wird, so daß der sich ergebende Ausbruchbereich eine Höhe H von weniger als einem Millimeter hat.

In Figur 3 ist in einer abgebrochenen Schnittansicht ein Abschnitt eines Blechteils 10 dargestellt, das mit einer weiteren Variante eines erfindungsgemäßen Verfahrens ausgehend von verzinktem Blech hergestellt wurde. Der Unterschied zu dem Verfahren, das für die Herstellung des in Figur 2 dargestellten Blechteils verwendet wurde, besteht darin, daS durch den Nachbearbeitungsschritt der Ausbruchbereich 34 vollständig beseitigt wurde. Es ist also der Anschnittbereich 32 so weit nach unten gedrückt worden, daß die gesamte Materialkante 30 mit Zink überzogen ist. Dies kann vorteilhaft sein, wenn besonders hohen Anforderungen an die Korrosionsbeständigkeit des Blechteils 10 gestellt werden.

In Figur 4 ist in einer abgebrochenen Schnittansicht ein Abschnitt eines Blechteils 10 dargestellt, das mit einer weiteren Variante eines erfindungsgemäßen Verfahrens ausgehend von verzinktem Blech hergestellt wurde. Der Unterschied zu dem Verfahren, das für die Herstellung des in Figur 1 dargestellten Blechteils verwendet wurde, besteht im wesentlichen darin, daß nach dem Trennschritt ein Nachbearbeitungsschritt ausgeführt wurde, bei dem Zink von der Oberfläche des Blechteils 10 auf die bei dem Trennschritt entstehende Materialkante 30 gebracht wird. Dieser Nachbearbeitungsschritt wird auf der Seite der Materialkante 30 ausgeführt, die zu der Seite des Anschnittbereichs 32 entgegengesetzt ist. Mit dem Nachbearbeitungsschritt wird Zink von der Oberfläche des Blechteils 10 auf einen Bereich 35 der Materialkante 30 gebracht, der dem Anschnittbereich 32 gegenüberliegt. In gleicher Weise wie bei dem für das Blechteil 10 von Figur 2 verwendeten Verfahren kann mit dem Nachbearbeitungsschritt die Höhe des nicht mit Zink überzogenen, verbliebenen Teils 34b der Materialkante 30 auf ein Maß vermindert werden, bei dem die Fernwirkung des Zinks die gesamten zinkfreien Bereiche der Materialkante 30 erfaßt.

## Patentansprüche

1. Verfahren zum Herstellen von Blechteilen (10) für Fahrzeuginsassen-Rückhaltesysteme ausgehend von verzinktem Blech in Bandform, mit mindestens einem Trennschritt, durch den das Blechteil (10) von dem in Bandform zugeführten Blech getrennt wird, und einem Nachbearbeitungsschritt, bei dem Zink, das bei dem Trennschritt von der Oberfläche des Blechs auf einen Teil der bei dem Trennschritt entstehenden Materialkante (30) gebracht wird, über einen größeren Flächenbereich der Materialkante verteilt wird.

2. Verfahren zum Herstellen von Blechteilen (10) für Fahrzeuginsassen-Rückhaltesysteme ausgehend von verzinktem Blech in Bandform, mit mindestens einem Trennschritt, durch den das Blechteil (10) von dem in Bandform zugeführten Blech getrennt wird, und einem Nachbearbeitungsschritt, bei dem Zink von der Oberfläche des Blechteils (10) auf den von Zink unbedeckten Teil der bei dem Trennschritt entstehenden Materialkante (30) gebracht wird.

3. Verfahren nach Anspruch 1, dadurch gekennzeichnet, daß das bei dem Trennschritt auf einen Teil der Materialkante (30) aufgebrachte Zink über die gesamte Materialkante verteilt wird.

4. Verfahren nach einem der vorhergehenden Ansprüche, dadurch gekennzeichnet, daß der Ausbruch der bei dem Trennschritt entstehenden Materialkante (30) eine in der Richtung der Dicke des Blechs gemessene Höhe (H) von weniger als einem Millimeter hat.

## Claims

1. A method for the production of sheet metal parts (10) for vehicle occupant restraint systems, starting from galvanized sheet metal in strip form, with at least one separation step by means of which the sheet metal part (10) is separated from the sheet metal supplied in strip form, and with a subsequent processing step in which zinc which, in the separation step, is brought from the surface of the sheet metal onto a part of the material edge (30) formed during the separation step, is distributed over a larger surface region of the material edge.

2. A method for the production of sheet metal parts (10) for vehicle occupant restraint systems, starting from galvanized sheet metal in strip form, with at least one separation step by means of which the sheet metal part (10) is separated from the sheet metal supplied in strip form, and with a subsequent processing step in which zinc is brought from the surface of the sheet metal part (10) onto the part not covered with zinc of the material edge (30) formed during the separation step.

3. A method according to claim 1, characterized in that the zinc which is applied onto a part of the material edge (30) during the separation step is distributed over the entire material edge.

4. A method according to any one of the preceding claims, characterized in that the break of the material edge (30) formed during the separation step has a height (H) of less than one millimeter, measured in the direction of the thickness of the sheet metal.

## Revendications

1. Procédé de fabrication de pièces de tôle (10) pour des systèmes de retenue de passagers dans un véhicule, à partir de tôle zinguée se présentant sous la forme d'une bande, avec au moins une: séquence de séparation, par laquelle la pièce de tôle (10) est séparée de la tôle amenée sous forme de bande, et avec une séquence de finition, lors de laquelle du zinc, qui est mis lors de la séquence de séparation de la surface de la tôle sur une partie du bord (30) de la matière, qui se forme lors de la séquence de séparation, est réparti sur une zone plus grande de la surface des bords de la matière.

2. Procédé de fabrication de pièces de tôle (10) pour des systèmes de retenue de passagers dans un véhicule, à partir de tôle zinguée se présentant sous la forme d'une bande, avec au moins une séquence de séparation, par laquelle la pièce de tôle (10) est séparée de la tôle amenée sous forme de bande, et avec une séquence de finition, lors de laquelle du zinc est mis de la surface de la pièce de tôle (10) sur la partie, non recouverte de zinc, du bord (30) de la matière, qui se forme lors de la séquence de séparation.

3. Procédé selon la revendication 1, caractérisé en ce que l'on répartit sur tout le bord de la matière le zinc mis sur une partie du bord de la matière (30) lors de la séquence de séparation.

4. Procédé selon l'une des revendications précédentes, caractérisé en ce que la coupe partielle du bord de la matière (30), qui se forme lors de la séquence de séparation, a une hauteur (H), mesurée dans le sens de l'épaisseur de la tôle, de moins d'un millimètre.
